# EUROPEAN PATENT APPLICATION

(11) **EP 1 690 620 A1**
(43) Date of publication of application: **16.08.2006**
(21) Application number: 05003189.7
(22) Date of filing: 15.02.2005
(51) Int. Cl.: B23D 23/00, B26D 1/09, E06B 9/266

(54) **Blind cutter**

(71) Applicant: NIEN MADE ENTERPRISE CO., LTD., Taichung (TW)
(72) Inventor: Nien, Ming, Taichung 408 (TW); Lee, Wen-Yeu, Taichung 408 (TW); Chen, Kun-Chang, Taichung 408 (TW); Chuang, Kun-Ming, Taichung 408 (TW)
(74) Representative: Viering, Jentschura & Partner

(57) **Abstract**

A blind cutter includes at least a worktable, a drive device, and a number of knife modules. The drive device has a speed-reducing motor for rotating a rotary shaft, and a number of gears fixed on the rotary shaft to engage and move a number of racks. The knife modules respectively have a module base arranged lengthwise on the work table, having a special hole for special blinds to pass through, with a knife fitted in slidably and respectively moved by the racks for cutting a blind material respectively extending on the module bases.

## Description

### BACKGROUND OF THE INVENTION

### 1. Field of the Invention

This invention relates to a blind cutter, particularly to one possible to cut many different sizes and types of blinds such as vertical blinds and lateral blinds.

### 2. Description of the Prior Art

There are no special regulations for the sizes of window blinds, so special blind cutters have to be used for each kind of blind having different lengths and width.

Conventional blind cutters are very simple, can cut only one size and also are operated manually without any guide devices or positioning devices, taking much time and work, hardly ensuring the good quality of cut blinds. There is also a conventional cutter using a motor for its power source, cutting with plural knife modules driven synchronously by a pushing device for cutting blinds positioned on each knife module.

However, the conventional electric cutter has a pushing device for the knife of each knife module, and the force exercising point of the pushing device does not constitute a straight line with the force receiving points of all the knives, with different bias distances. So in cutting process, the bias distances may produce twisting torque, which may cause damage to the relative transmitting components of the knife modules and the pushing device, Besides, The knife of each knife module has to be assembled together or taken off the knife base, not designed to form an independent unit. Therefore, in replacing a knife with new one, it must be assembled with the knife base, and adjusted together for correcting the cutting location of the knife, quite inconvenient in handling, in addition to difficulty for ensuring the accuracy of the sizes of cut blinds.

### SUMMARY OF THE INVENTION

The blind cutter according to the invention includes at least a worktable, a drive device and a number of knife modules. The drive device has a speed-reducing motor for rotating a rotary shaft, which has a number of gears for engaging and moving a number of racks. The knife modules respectively have a module base arranged in a lengthwise line on the worktable, and each module base has a special hole for blind material to pass through, with a knife fitted slidably in each module base and moved laterally together with the racks for cutting blind material placed on the module base.

The key point in the invention is that each knife module is separately moved laterally by gears and racks so that the force exercising point and the force receiving point form a straight line, avoiding happening of twisting torque so that the transmitting structure of the drive device may not be damaged by twisting torque and accordingly the components can have a long service life, ensuring the good quality of finished products, with the knife module possible to be altered with that with other sizes to match with different kinds of blinds.

### BRIEF DESCRIPTION OF DRAWINGS

This invention will be better understood by referring to the accompanying drawings, wherein:
Figure 1 is a perspective view of a blind cutter in the present invention;
Figure 2 is a perspective view of the inner structure of the blind cutter in the present invention;
Figure 3 is a partial perspective view of the blind cutter in the present invention;
Figure 4 is a perspective view of a drive device and a knife module in the present invention;
Figure 5 is a perspective view of the drive device in the present invention;
Figure 6 is a rear perspective view of the drive device and the knife module in the present invention;
Figure 7 is an exploded perspective view of the knife module in the present invention;
Figure 8 is an upper view of the blind cutter being used for cutting vertical blinds in the present invention; and,
Figure 9 is an upper view of the blind cutter being used for cutting lateral blinds in the present invention.

### DETAILED DESCRIPTION OF THE PREFERRED EMBODIMENT

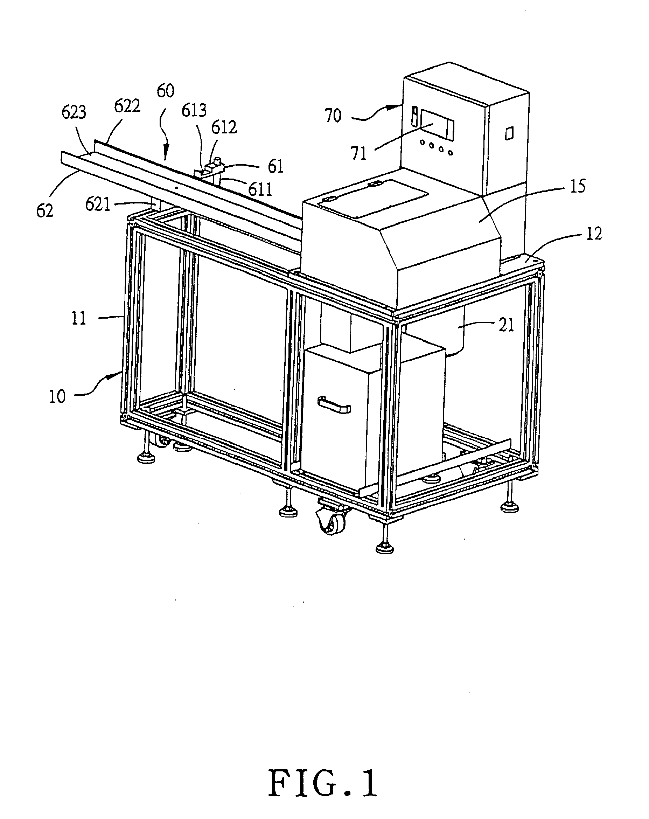

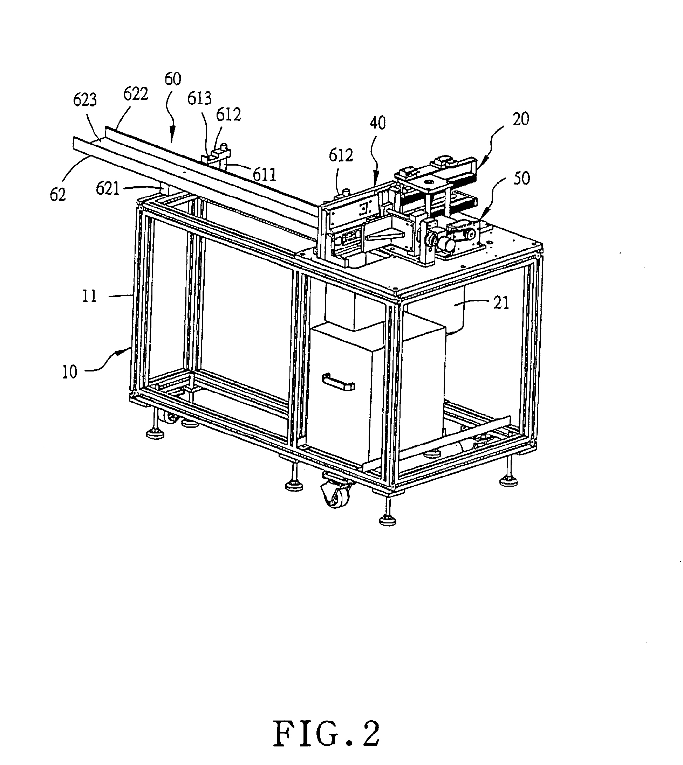

A preferred embodiment of a blind cutter in the present invention, as shown in Figs. 1 and 2, includes a worktable 10, a drive device 20, a pressure absorbing device 30, two knife modules 40, a stop device 50, a guide device 60 and a control case 70.

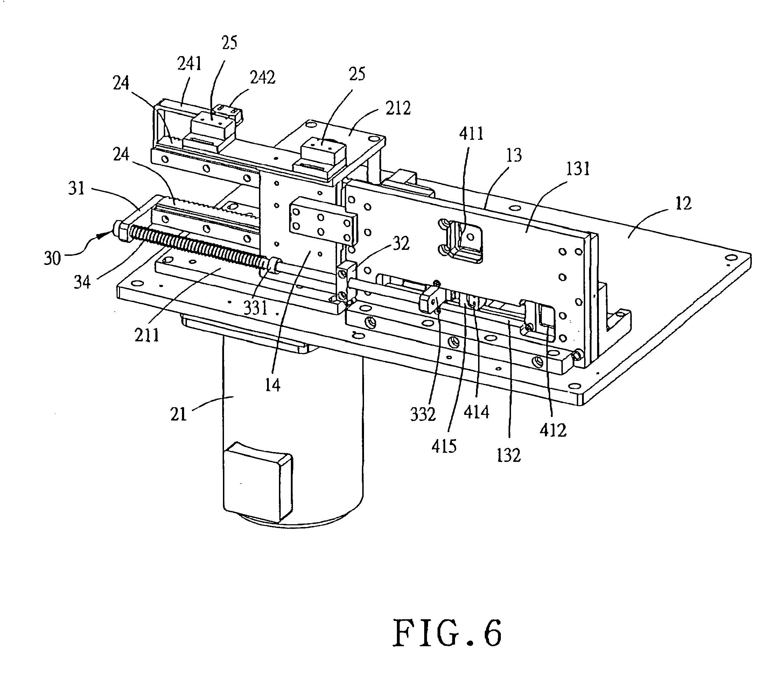

The work table 10 is composed of a foot frame 11, a table 12 fixed on a proper location on the upper surface of the foot frame 11, and a module base fixing plate 13 fixed on a proper location on the table 12, as shown in Fig. 6. The module base fixing plate 13 has a vertical plate 131 and a guide base 14 fixed at the rear surface, and the vertical plate 13 is bored with a horizontal elongate slot 132. Further, a shell 15 is provided to cover on the worktable 10 for protecting the components fixed on the table 12.

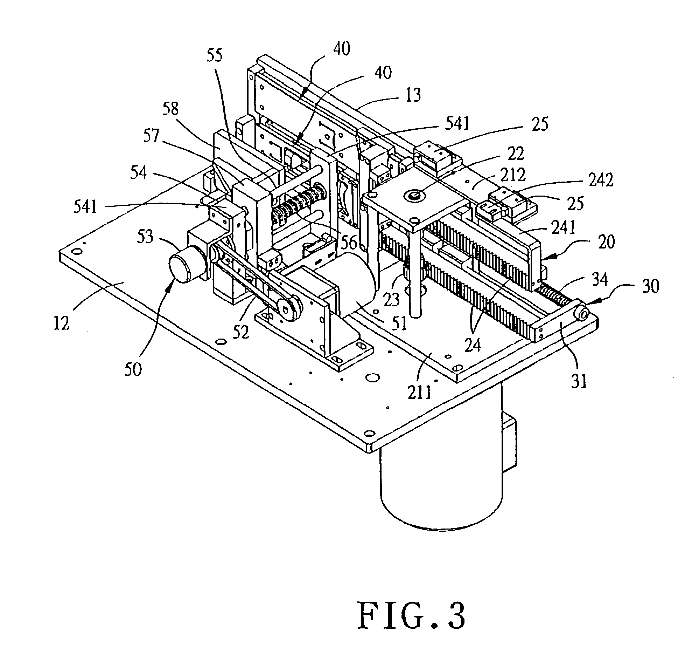

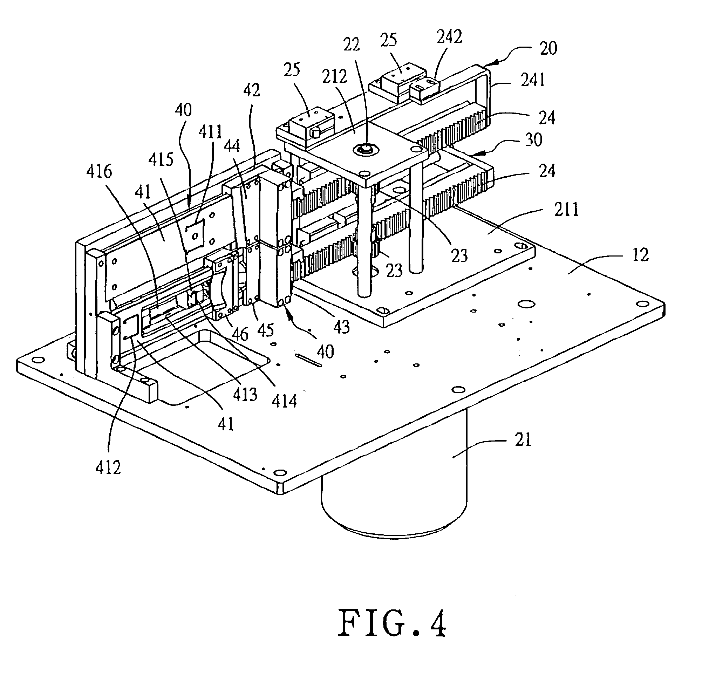

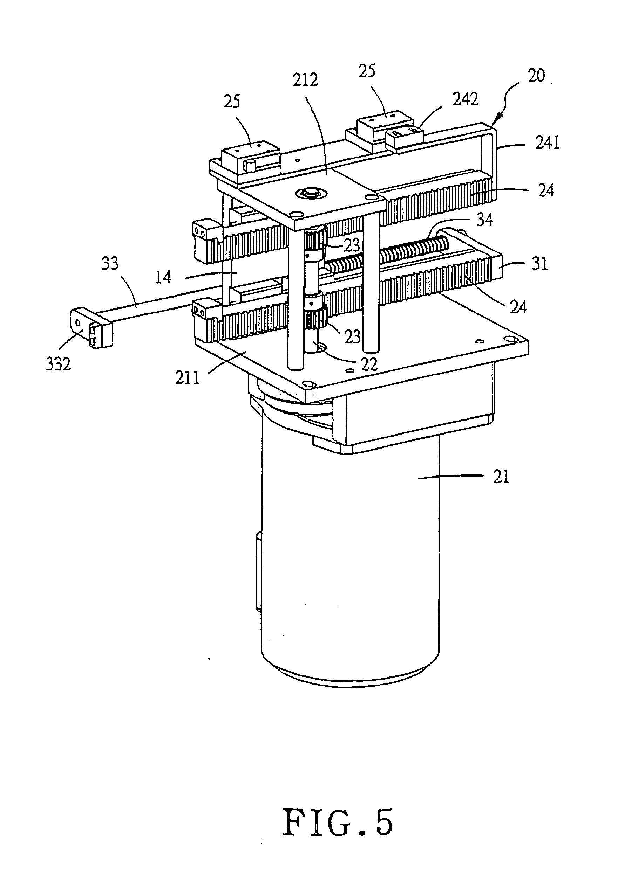

The drive device 20, as shown in Figs. 3, 4 and 5, consists of a speed-reducing motor 21, a fix plate 211 fixed on the speed-reducing motor 21 and also fixed on the table 12 of the work table 10, and a shaft base 212 combined between the fix plate 211 and the guide base 14 of the work table 10. The motor 21 has a rotary shaft 22 as an output shaft, and the end of the rotary shaft 22 is connected rotatably with the center of the shaft base 212. Further, an upper gear 23 and a lower gear 23 are respectively fixed around the upper and the lower end of the rotary shaft 22, and two racks (one upper the other lower) 24, 24 respectively engaging the upper and the lower gear 23, 23 and fitting stably in the guide base 14 of the work table 10. An L-shaped strip 241 is provided to have its lower end fixed with the outer end of the upper rack 24, with one sensor 242 fixed on the elongate upper portion of the L-shaped strip 241 and two switches 25, 25 spaced apart on the shaft base 212 to interact with the sensor 242 so as to receive a control signal from the sensor 242 in case of the sensor 242 moving near to either of the two switches 25 for positioning accurately the two racks 24, 24 in shifting.

The pressure absorbing device 30 shown in Fig. 6 consists of a front guide block 31 fixed with the outer end of the lower rack 24, and a rear guide block 32 fixed on a rear side of the vertical plate 131. Further, a push rod 33 is provided to extend through the front and the rear guide block 31 and 32, having a rear end engaging the rear guide block 32 and an intermediate portion provided with a position member 331, and in this embodiment a ring around the push rod 33 is used as the positioning member 331. Between the positioning member 331 and the rear guide block 32 is placed a coil spring 3. The push rod 33 further has a pressing member 332 fixed at its front end and properly received in the elongate horizontal hole 132 of the vertical plate 131 so that the coil spring 34 may produce resilience and pressure absorbing function when compressed.

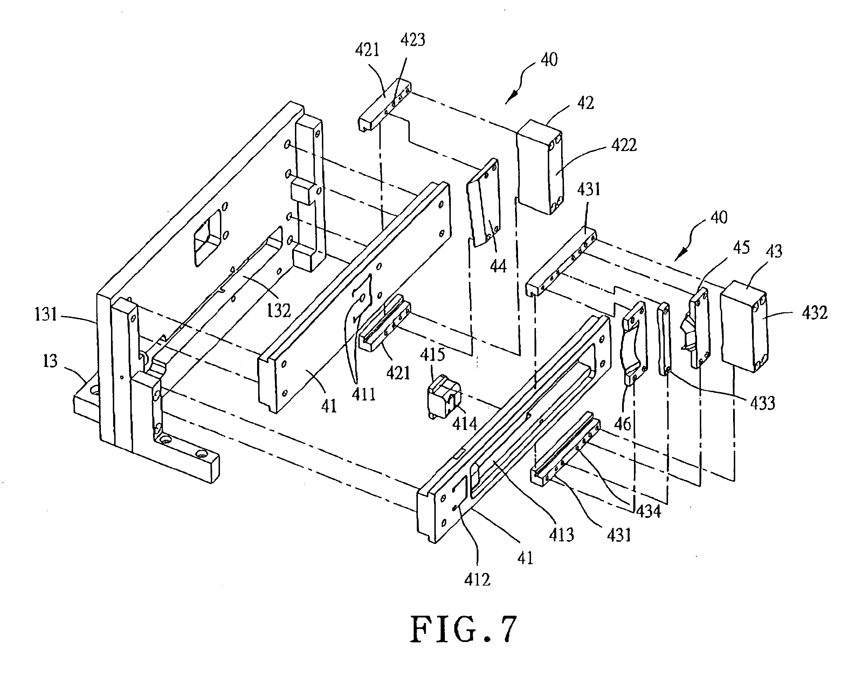

The knife module 40 shown in Fig. 7 consists of two module bases 41, 41, two knife bases 42, 43, a first knife 44, a second knife 45 and a third knife 46.

The two module bases 41, 41 are fixed respectively on an upper and lower surface of the front wall of the vertical plate 131 of the module fixing plate 13 on the work table 10.The upper module base 41 has an upper rod hole 411 matching with the cross-sectional shape of the upper rod of a vertical blind, and the lower module base 41 has an upper-rod hole 412 matching with the cross-section of an upper rod of a lateral blind and a guide slot 413 beside the upper-rod hole 412 for a slide block 415 fitting slidably therein, with the slide block 415 having a lower rod hole 414 matching with the cross-section of the lower rod of a lateral blind. Then the slide block 415 and the upper rod hole 412 define the slide slot 413 between them as a blind-strip slot 416. At the same time, the push member 332 of the pressure absorbing device 30 can fit in the guide block 413 to face the slide block 415, which then receives elastic pressing of the push member 332 before performing cutting.

The two knife bases 42 and 43 are fitted slidably and respectively in the upper and the lower module bases 41, 41, The upper knife base 42 consists of two - one upper and other lower - rail blocks 421, 421 and a position block 422 connected between the two rail blocks 421, 421. The upper and the lower rail blocks 421, 421 are provided with plural threaded holes 423, so the first knife 44 for cutting a vertical-blind upper rod may be fixed by screws with the upper and the lower rail block 421, 421 after placed to contact with the sidewall of the position block 422. The lower knife base 43 consists of two - one upper and the other lower - rail blocks 431. 431 and two position blocks 432, 433 fixed between the two rail blocks 431, 431 so that the second knife 45 for cutting a lateral blind strip may be fixed by screws engaging with the threaded holes 434 of the upper and the lower rail blocks 431, 431 after placed to contact the sidewall of the position block 432. In the same way, the third knife 46 for cutting a lateral blind is fixed by screws engaging with the threaded holes 434 of the upper and the lower rail blocks 431, 431 after placed to contact the sidewall of the position block 433.

The upper and the lower knife bases 42 and 43 are connected firmly with the drive device 20 by the two position blocks 422, 432 fixed with the relative ends of the two racks 24, 24 so that the first, the second and the third knife 44, 45 and 46 may shift along the two module bases 41, 41 laterally for carrying out cutting action against blind material..

The stop device 50 shown in Fig. 3 is fixed on the table 12 of the work table 10, consisting of a motor 51, a belt 52, a counter 53, a U-shaped frame 54, two guide rods 55, 55, a threaded rod 56, and a position base 57 and a stop plate 58.

The belt 52 is driven by the motor 51, rotating the counter 53, which is fixed on one of two vertical plates 541 of the U-shaped frame 54, with the guide rod 55 positioned between the two vertical plates 541, and with the threaded rod 56 extending through the intermediate portion for rotating the counter 53. The position base 57 engages with the threaded rods 56, guided by the upper and the lower guide rods 55, 55 to shift. Then the stop plate 58 is connected firmly with the position base 57, facing the relative location of the upper and the lower module bases 41, 41 and properly pressing the end of the blind material, with the threaded rod 56 adjusting the position of the stop plate 58 to control the exact length of the blind material to be cut off.

The guide device 60, as shown in Figs. 1 and 2, consists of a first bracket 61 for guiding a vertical blind material, a second bracket for guiding a lateral blind material.

The first bracket 61 is composed of two support rods 611, 611 fixed properly on the work table 10, and a support block 612 fixed respectively on the two support rod 611, 611 and provided with a recessed guide groove 613 for receiving, supporting and guiding an upper rod passing through the upper rod hole 411 of the upper module base 41. The second bracket 62 is composed of two bottom blocks 621, 621 fixed properly on the worktable 10, and a U-shaped plate 622 with a guide groove 623 fixed on top of each bottom block 621. The guide groove 623 is for receiving, supporting and guiding the upper rod, blind strips and the lower rod of a lateral blind to pass through the upper rod hole 412, the blind strip hole 416 and the lower rod hole 414 of the lower module base 41

The control case 70 shown in Fig. 1, is fixed properly on the work table e 10, consisting of a faceplate 71 for indicating input values to be controlled, such as the length of the blind to be cut, Then the counter 53 driven by the motor 5 calculates the value and feeds it back to automatically adjust the position of the stop plate 58, for quickly controlling the length of the blind material.

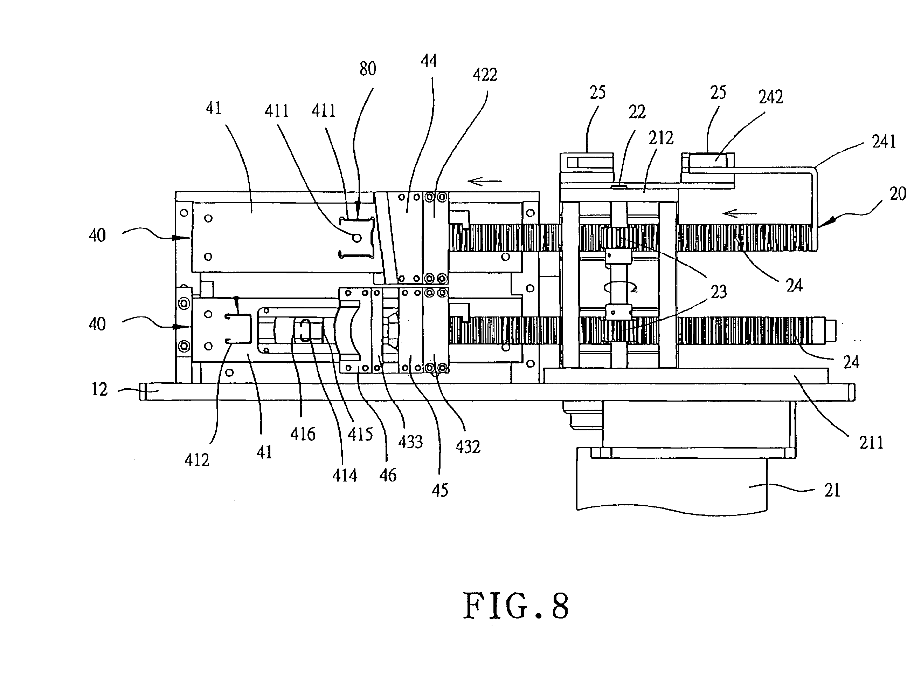

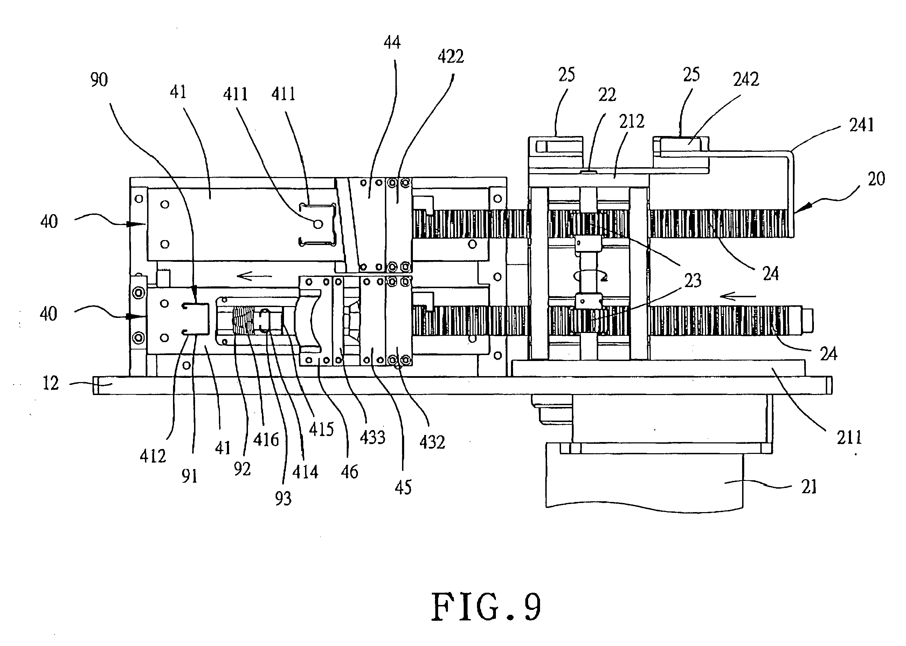

Next, as shown in Figs., 1 and 3, this blind cutter can cut vertical blinds and lateral blinds at the same time, and how to operate the blind cutter is described as follows.
(1) Cutting vertical blinds: Firstly, a user puts in the length of the blind to be cut on the control faceplate 71, and adjusts the stop plate 58 of the stop device 50. Then as shown in Fig. 8, the user places the upper rod 80 on the guide groove 613 of he bracket 61 of the upper module base 41, and also slides it toward the upper module base 41 and lets it pass through the upper rod hole 411 until it contacts the stop plate 58 at its upper end. Then the upper rod 80 is quickly located just at the right position for being cut. After that, the speed-reducing motor 21 is started to rotate the rotary shaft 22, which then moves the upper gear 23 to shift the upper rack 24, and consequently the first knife 44 of the upper knife module 40 moves along the upper module base 41, cutting the upper rod positioned in the upper module 41. Meanwhile the switch 25 on the shaft base 212 interacts with the sensor 242 to move back the first knife 44 after cutting, finishing cutting process of the upper rod of the vertical blind.
(2) Cutting lateral blinds: Firstly, a user puts in the length of a lateral blind through the faceplate 71 of the control case 70, and adjusts the location of the stop plate 58. After that, as shown in Fig. 9, the lateral blind 90 is placed on the guide groove 623 of the second bracket 62 of the lower module base 41, and slid toward the lower module base 41, letting the upper rod 91, blind strips 92 and the lower rod 93 respectively pass through the upper rod hole 412, the blind strip hole 416 and the lower rod hole 414 until it contacts the stop plate 58. The lateral blind 90 is quickly located just at the right position for being cut. Then the speed-reducing motor 21 of the drive device 20 is stared to rotate the rotary shaft 22, which then moves the lower gear 23 to shaft the lower rack 24, letting the second knife 45 of the lower knife module 40 shift along the upper module base 41. Now it is important to mention that the pressure-absorbing device 30 is connected with the lower rack 24, so the lower rack 24 is shifted at the same time. Therefore, the push member 33 of the pressure absorbing device 30 will first contact the slide block 415 before contacting the lower rod 93, so the push rod 33 may be pushed back, and at the same time the intermediate portion 331 compresses the coil spring 34, which produces recovering elasticity to force the terminal pressing member 332 elastically compress the slide block 415 to shift, and slide block 415 with the lower rod 93 together shifted toward the blind strips 92. Thus, the lower rod 93 and the blind strips 92 are clamped closely together, producing pressure-absorbing function. After that, the second knife 45 may orderly cut the lower rod 93, the blind strips 92 and the upper rod 91, and guide the angles of the lower rod 93 and the blind strips 92 as well. Finally, the switch 25 on the shaft base 212 may interact with the sensor 242 on the rack 24, letting the second and the third knife 45 and 46 move back to their original position., finishing the whole cutting process of the lateral blind.

The blind cutter according to the invention has the following advantages.
1. The knife bases 41, 41 and the first, the second and the third knife 44, 45 and 46 of the knife module 40 are moved separately by the two gears 23, 23 and the two racks 24, 24 of the rotary shaft 22, so the three knives 44, 45 and 46 have their cutting force points aligned to the force points of the two gears 23, 23 and the two racks 24, 24 so that the force of the knife module 40 caused by cutting may directly be transmitted to the relative gear 23 and the relative rack 24, preventing twist torque from happening, ensuring that the knife bases 41, 41 and the three knives 44, 45 and 46 together with the two gears 23, 23 and the two racks 24, 24 may not be damaged by twisting torque, with its service life prolonged accordingly.
2. As described above, each knife module 40 is matched with a separate pushing structure, possible to avoid twisting torque or damage unjustifiable, so except changing the knife module 40, the knife module 40 can be increased, with their cutting efficiency and quality able to be maintained as good as possible.
3. As the knife module can be augmented according to necessity, the blind cutter can be made to have various kinds of functions for vertical binds and later blinds common seen, by designing special holes 411, 414 and 416 in the knife modules 40.
4. The three knives 44, 45 and 46 can be assembled and disassembled easily, quickly and accurately to secure smoothness and precision in cutting, without need of adjusting and correction each time after each assembly process, as the three knives 44, 45 and 46 are correctly positioned in the knife bases 42, 42, fixed with the rail blocks 421, 431 and facing the position blocks 422, 432, keeping the cutting direction and the sliding direction definite and correct.
5. The pressure absorbing device 30 man help cutting blinds for maintaining the good quality of finished cut blinds, and prevent them from clamping scars by absorbing pressure and clamping elastically the lower rod 93 and each blind strip 92 for cutting.
6. The cutting operation can be carried out conveniently, quickly and accurately by putting in the value of the length needed for blinds in the faceplate 71 and adjusting the location of the stop plate 58 of the stop device 50.

While the preferred embodiment of the inventin has been described above, it will be recognized and understood that various medications may be made therein and the appended claims are intended to cover all such modifications that may fall within the spirit and scope of the invention.

## Claims

1. A blind cutter comprising at least:
A worktable:
A drive device consisting of a motor fixed on said worktable, said motor rotating a rotary shaft, said rotary shaft having a preset number of gears to engage and move racks:
A preset number of knife modules respectively consisting of a module base fixed on said work table, each said module base provided with a blind hole shaped as the same as the cross-section of a blind to be cut for blind material to pass through, each module base having a knife fitted stably therein and moved by said each rack of said drive device, said knife moving laterally along said module base for cutting the blind material passing through said module base.

2. The blind cutter as claimed in Claim 1, wherein said work table further has a foot frame that has a table fixed on the upper side, and said motor has a motor fixing plate fixed on said table, a shaft base connected with said motor fixing plate for the end of said rotary shaft to be combined movably fitted in.

3. The blind cutter as claimed in Claim 1, wherein said rotary shaft is the output shaft of said motor, and having the preset number of said gears fixed thereon

4. The blind cutter as claimed in Claim 1, wherein said racks are respectively provided with a sensor and two switches located near the shifting course of said sensor, and said switches respectively interact with said sensor whenever the sensor moves closely near either of said switches for sending a control signal for moving and positioning said racks.

5. The blind cutter as claimed in Claim 1, wherein one of said racks further has a pressure-absorbing device for pressing a blind material in advance to move together with said rack.

6. The blind cutter as claimed in Claim 6, wherein said pressure absorbing device consists of a front guide block properly connected with said rack and a rear guide block properly connected with said work table, a push rod provided between said front guide block and said rear guide block, said push rod having its rear end limited in its position by said rear guide block and its intermediate portion provided with a position member, a coil spring placed between said rear guide block and said position member, a pressing member fixed at the front end of said push rod, said coil spring producing recovering elasticity to function as pressing pushing and pressure absorbing.

7. The blind cutter as claimed in Claim 1, wherein said work table further has a module base fixing plate fixed thereon so said module bases of said knife modules are fixed lengthwise in a line.

8. The blind cutter as claimed in Claim 1, wherein a slide guide base is fixed on said worktable for said racks to fit therein and to be guided by.

9. The blind cutter as claimed in Claim 1, wherein a stop device is further fixed properly on said work table, said stop device consists of at least a motor,'a counter rotated by said motor, and a threaded rod rotated by said counter, said threaded rod engaging with and moving a stop plate, said stop plate having its position adjusted for stopping a blind material so as to control the length of the blind material to be cut.

10. The blind cutter as claimed in Claim 1, wherein said three knives are respectively fixed on said module base by a knife base, and said knife base is fitted movably in a relative one of said module bases.

11. The blind cutter as claimed in Claim 1, wherein a control case is further fixed on said work table, said control case provided with a faceplate for indicating an input of the length of a blind to be cut so as to control the location of said stop plate of said stop device.

12. The blind cutter as claimed in Claim 1, wherein a bracket is respectively provided on said work table to match with each said module base for receiving, supporting and guiding a blind material to be cut into said holes of each said module base.

13. The blind cutter as claimed in Claim 1, wherein an upper rod hole is further provided in one of said module bases for the upper rod of a vertical blind to pass through.

14. The blind cutter as claimed in Claim 1, wherein an upper rod hole is provided in one of said module base, and a slide guide groove is provided at the neighborhood of said upper rod hole, a slide block with a lower rod hole fitted slidably in said slide guide groove, said slide guide groove defined by said slide block and said upper rod hole naturally forming a blind strip hole so the upper rod, each blind strip and the lower rod may pass through said upper rod hole, said blind strip hole and said lower rod hole of said module base, and said slide block receiving elastic pressure to clamp tightly the lower rod and each of the blind strips.
